# NEUE EUROPÄISCHE PATENTSCHRIFT

(11) **EP 1 992 829 B2**
(45) Veröffentlichungstag und Bekanntmachung des Hinweises auf die Entscheidung über den Einspruch: **18.01.2017**
(45) Hinweis auf die Patenterteilung: 16.03.2011
(21) Anmeldenummer: 08009051.7
(22) Anmeldetag: 16.05.2008
(51) Int. Cl.: F16C 19/52, F16C 25/08, F16C 37/00

(54) **Verfahren zum Einstellen der Vorspannung eines Wälzlagers, Wälzlagereinheit mit einstellbarer Vorspannung sowie Rundtisch und Spindel mit entsprechender Wälzlagereinheit**
Method for adjusting the initial tension of a ball bearing, ball bearing unit with adjustable initial tension and rotary table and spindle with corresponding ball bearing unit
Procédé de réglage de la précontrainte d'un palier à roulement, unité de palier à roulement dotée d'une précontrainte réglable ainsi que table ronde et broche dotée d'une unité de palier à roulement correspondante

(30) Priorität: 18.05.2007 DE 102007023507; 26.06.2007 DE 102007029571
(43) Veröffentlichungstag der Anmeldung: 19.11.2008
(73) Patentinhaber: Fibro GmbH, 74189 Weinsberg (DE)
(72) Erfinder: Gruenewald, Thomas, 64823 Gross-Umstadt (DE); Schenk, Michael, 74629 Pfedelbach (DE)
(74) Vertreter: Sperling, Rüdiger

(56) Entgegenhaltungen:
- EP-A1- 1 418 352
- DE-A1- 3 826 945
- DE-A1-102006 040 778
- DE-B4- 19 944 652
- GB-A- 2 111 136
- JP-A- 4 025 343
- JP-A- 2003 056 584
- US-A- 2 747 945

## Beschreibung

Die Erfindung betrifft ein Verfahren zum Einstellen der Vorspannung eines Wälzlagers, wobei das Wälzlager zur drehbaren Lagerung eines ersten Bauteils in einem zweiten Bauteil zwischen den Bauteilen angeordnet ist, wobei das Wälzlager einen am ersten Bauteil angeordneten Lagerinnenring, einen am zweiten Bauteil angeordneten Lageraußenring und eine Mehrzahl von Wälzkörpern aufweist.

Des Weiteren betrifft die Erfindung eine Wälzlagereinheit mit einstellbarer Vorspannung, mit einem ersten Bauteil, einem zweiten Bauteil und einem wischen den Bauteilen angeordneten Wälzlager zur drehbaren Lagerung des ersten Bauteils in dem zweiten Bauteil, wobei das Wälzlager einen am ersten Bauteil angeordneten Lagerinnenring, einen am zweiten Bauteil angeordneten Lageraußenring und eine Mehrzahl von Wälzkörpern aufweist.

Schließlich betrifft die Erfindung noch einen Rundtisch und eine Spindel mit einer entsprechenden Wälzlagereinheit.

Eine Wälzlagerung dient ganz allgemein zur möglichst reibungsarmen drehbaren Lagerung eines ersten Bauteils in einem zweiten Bauteil. Um eine möglichst spielfreie Lagerung zu gewährleisten, wird das Wälzlager üblicherweise mit einer Vorspannung versehen, d. h. der Innenring des Wälzlagers weist gegenüber dem ersten Bauteil ein Untermaß auf, während der Lageraußenring gegenüber dem zweiten Bauteil ein Übermaß aufweist.

Die Montage des Lagers erfolgt dabei in geeigneter, aus dem Stand der Technik bekannter Weise, wie z. B. durch Aufschrumpfen und/oder Einpressen auf bzw. in das entsprechende Bauteil.

Es ist folglich bereits aus dem Stand der Technik bekannt, ein Wälzlager mit einer gewünschten Vorspannung zu montieren.

Während des Betriebs des Wälzlagers können sich jedoch durch eine Änderung der Vorspannung Probleme ergeben. Ist die Vorspannung zu gering gewählt, kann sie durch während des Betriebs auf die gelagerten Bauteile einwirkenden Kräfte reduziert oder sogar aufgehoben werden. Als Folge weisen die Bauteile ein axiales und/oder radiales Spiel auf. Ist die Vorspannung jedoch zu groß gewählt, kommt es beim Betrieb des Wälzlagers zu einer Überhitzung des Lagers, was zu einer weiter ansteigenden Lagerreibung und schließlich zum Versagen des Lagers führt.

Besonders problematisch und schwer vorhersehbar sind Fälle, bei denen sich während des Betriebs des Wälzlagers der Lagerinnen- und der Lageraußenring auf verschiedene Temperaturen aufheizen oder abkühlen. Je nach Temperaturunterschied zwischen den Ringen kann es dabei sowohl zu einer Reduzierung als auch zu einer Erhöhung der Lagervorspannung kommen. Als Folge weist das Lager entweder ein unerwünschtes Axial- und/oder Radialspiel oder eine erhöhte Lagerreibung auf, welche zum Ausfall der gesamten Maschine führen können.

Eine schwankende, nicht vorhersagbare oder während des Betriebs nachlassende Führungsgenauigkeit von Wälzlagern ist insbesondere bei Maschinen zur Positionierung oder zur Bearbeitung von Werkstücken nicht tolerierbar. Dies betrifft unter anderem so genannte Rundtische, insbesondere Rundschalt- oder Rundlauftische, die ganz allgemein einen drehbar in einem Gehäuse gelagerten Teller aufweisen. Mit derartigen Rundtischen werden beispielsweise auf dem Teller angeordnete Werkstücke oder Werkzeuge positioniert oder auf dem Teller eingespannte Werkstücke in Rotation versetzt und einem Werkzeug zugeführt. Das elementare Bauteil eines Rundtisches ist dabei die Wälzlagerung des Tellers im Gehäuse. Bei Auftreten von Lagerspiel verschlechtert sich die Bearbeitungsgüte rapide, da der Teller bei Vorhandensein von Lagerspiel eine unerwünschte Kippbewegung gegen die Horizontale ausführen kann.

Eine vergleichbare Situation findet man bei Spindeln, bei denen eine Spindelwelle drehbar in einem Gehäuse gelagert ist. Am Ende der Spindelwelle ist im Allgemeinen ein Werkzeug (beispielsweise ein Fräskopf) befestigbar. Beim Betrieb der Vorrichtung wirken nun einerseits schwankende und betragsmäßig hohe Kräfte auf die Lagerung der Spindelwelle ein, andererseits kommt es durch interne (z.B. Lagerreibung) oder externe Einflüsse zu wechselnden Temperaturbelastungen des verbauten Wälzlagers. Auch hier gilt es, das Auftreten von Lagerspiel genauso zu vermeiden wie eine übermäßige Erhöhung der Lagerreibung.

Hieraus wird deutlich, dass das bekannte Verfahren zur Einstellung der Vorspannung eines Wälzlagers, nämlich die Vorspannung bei der Montage des Wälzlagers festzulegen, besonders nachteilig im Hinblick auf eine gleichbleibende Führungsgenauigkeitwährend des Betriebs der Vorrichtung ist. Des Weiteren ist das bekannte Verfahren nachteilig im Hinblick auf das Einwirken wechselnder Betriebszustände und Lagerkräfte und insgesamt die Langlebigkeit des Wälzlagers betreffend.

Die nachveröffentlichte EP 2 057 382 A2 zeigt eine Vorrichtung zur Überwachung mindestens einer Betriebsgröße einer Lageranordnung eines Werkzeugmaschinentisches.

Die JP 2003 056584 A zeigt eine Vorrichtung, mit der die durch ein Wälzlager während des Betriebs abgegebene Wärmemenge bestimmbar ist.

Die JP 04 025343 A offenbart eine Spindelwelle, welche mittels zweier Kugellager in einem konzentrischen Gehäuse gelagert ist. Dabei ist die gesamte Spindel und das gesamte Gehäuse kühlbar, um die Verringerung der Vorspannung aufgrund thermischer Ausdehnung der Vorrichtung möglichst zu begrenzen.

Die GB-A-2 111 136 A offenbart ein Verfahren zum Einstellen der Vorspannung eines Wälzlagers sowie eine Wälzlagereinheit mit einstellbarer Vorspannung. Ferner beschäftigt sich die EP 1 418 352 A1 mit einem Verfahren gemäß dem Oberbegriff von Anspruch 1 und einer Vorrichtung gemäß dem Oberbegriff von Anspruch 3.

Der vorliegenden Erfindung liegt die Aufgabe zugrunde, ein Verfahren zum Einstellen der Vorspannung eines Wälzlagers anzugeben, mit dem die Einstellung einer beliebigen Vorspannung während des Betriebs realisiert ist.

Der Erfindung liegt ferner die Aufgabe zugrunde, eine Wälzlagereinheit mit entsprechend einstellbarer Vorspannung sowie einen Rundtisch und eine Spindel mit einer entsprechenden Wälzlagereinheit anzugeben.

Im Hinblick auf ein Verfahren zum Einstellen der Vorspannung eines Wälzlagers ist diese Aufgabe mit den Merkmalen des Patentanspruchs 1 gelöst.

Erfindungsgemäß ist erkannt worden, dass mittels einer unabhängigen Regelung der Temperatur der beiden Lagerringe eine Veränderung der Vorspannung des Wälzlagers ausgeglichen bzw. rückgängig gemacht werden kann. Des Weiteren ermöglicht das erfindungsgemäße Verfahren im eingebauten Zustand die Einstellung einer beliebigen Vorspannung während des Betriebs des Wälzlagers, so dass jederzeit auf wechselnde Betriebszustände oder Temperatureinwirkungen auf das Wälzlager reagiert werden kann.

In erfindungsgemäßer Weise ermöglicht das vorgeschlagene Verfahren insbesondere, auf ein Betriebsverhalten zu reagieren, bei dem sich der eine Lagerring stärker erwärmt oder abkühlt als der andere Lagerring. Solch ein Betriebszustand ist bisher stets mit einer Änderung der Vorspannung des Wälzlagers verbunden gewesen, die jedoch mit dem erfindungsgemäßen Verfahren ausgleichbar ist. Neigt bei der betreffenden Wälzlagereinheit beispielsweise der Lageraußenring zu einer stärkeren Erwärmung als der Lagerinnenring, kann der Lageraußenring gezielt gekühlt werden und umgekehrt. So bleibt die vorher eingestellte bzw. gewünschte Vorspannung des Wälzlagers stets konstant.

Sowohl die Temperatur des Lagerinnenrings als auch die Temperatur des Lageraußenrings können unabhängig voneinander geregelt werden. Dies betrifft insbesondere Betriebszustände, bei denen sich beide Lagerringe erwärmen, jedoch auf jeweils unterschiedliche Temperaturen. Die Temperatur beider Lagerringe kann gezielt geregelt werden, so dass die Vorspannung des Wälzlagers insgesamt gleich bleibt.

Zur Temperaturmessung an den Lagerringen können bei allen Ausführungsformen der Erfindung Vorrichtungen gemäß Stand der Technik dienen, beispielsweise ein oder mehrere Thermoelemente und/oder ein oder mehrere Widerstandsthermometer, die in geeigneter Weise im jeweils benachbarten Bauteil in mittelbarem oder unmittelbarem Kontakt zum Lagerring positioniert werden können.

Um eine Temperaturregelung beider Lagerringe zu realisieren, wird dem Lagerinnenring und dem Lageraußenring über separate Zuleitungen oder separate Kreisläufe jeweils ein Kühl- oder Heizmedium zugeführt.

Dabei kann es sich beispielsweise um Wasser, Öl, eine Emulsion aus Wasser und Öl, Luft, oder dergleichen handeln. Sofern lediglich eine Kühlung des betreffenden Lagerrings vorgesehen ist, bietet sich die Verwendung von Wasser oder Luft an.

Mit dem erfindungsgemäßen Verfahren sind weder Einbußen bei der Führungsgenauigkeit des Wälzlagers noch eine Erhöhung der Lagerreibung durch eine zu hohe Vorspannung hinzunehmen.

Besonders bevorzugt ist eine Weiterbildung, bei der die Temperatur eines Lagerrings bzw. die Temperatur beider Lagerringe so geregelt wird bzw. werden, dass die Verspannung während des Betriebs des Wälzlagers konstant bleibt. Zur Temperaturüberwachung und -einstellung können dabei - wie auch bei allen anderen Ausführungsformen - Regelungsvorrichtungen gemäß Stand der Technik verwendet werden, welche mit der jeweils bevorzugten Kühl- oder Heizeinrichtung in geeigneter Weise korrespondieren können. Mit der vorgeschlagenen Regelung ist es ebenfalls möglich, während des Betriebs und im eingebauten Zustand des Wälzlagers eine beliebige Vorspannung einzustellen, nämlich durch gezieltes Erhitzen und/oder Abkühlen eines oder beider Lagerringe.

Des Weiteren ist die oben aufgezeigte Aufgabe in Bezug auf eine Wälzlagereinheit mit einstellbarer Vorspannung mit den Merkmalen des Patentanspruchs 3 gelöst.

In erfindungsgemäßer Weise ermöglicht die vorgeschlagene Wälzlagereinheit die Einstellbarkeit der Vorspannung des Wälzlagers sowohl im eingebauten Zustand als auch während des Betriebs der gesamten Vorrichtung. Dazu ist vorgesehen, dass sowohl die Temperatur des Lagerinnenrings als auch die Temperatur des Lageraußenrings unabhängig voneinander regelbar sind.

Im Hinblick auf eine besonders genaue und stabile Regelung der Ringtemperaturen ist die erfindungsgemäße Wälzlagereinheit so ausgestaltet, dass dem Lagerinnenring und dem Lageraußenring über separate Zuleitungen oder separate Kreisläufe jeweils ein Kühl- oder Heizmedium zuführbar ist.

In Bezug auf Vorteile, vorteilhafte Ausgestaltungen und Weiterbildungen der erfindungsgemäßen Wälzlagereinheit wird auch auf die Ausführungen zum erfindungsgemäßen Verfahren verwiesen.

Im ersten Bauteil können ein oder mehrere Kanäle zum Zu- und Ableiten von Kühl- oder Heizmedium zum bzw. vom Lagerinnenring und/oder im zweiten Bauteil ein oder mehrere Kanäle zum Zu- oder Ableiten von Kühl- oder Heizmedium zum bzw. vom Lageraußenring ausgeformt sein. Die Anzahl und der Durchmesser der Kanäle kann dabei unter Berücksichtigung des Wälzlagerdurchmessers, der ab- oder zuzuführenden Wärmemenge oder dem Erfordernis einer schnellen Temperatureinstellung gewählt werden.

In besonders bevorzugter Weise sind im ersten und/oder im zweiten Bauteil ein dem Lagerinnenring bzw. dem Lageraußenring zumindest größtenteils umgebender Ringkanal ausgeformt, über den dem jeweiligen Lagerring Kühl- oder Heizmedium zugeführt werden kann. Der Ringkanal kann dabei einer nutähnlichen Vertiefung im Bauteil entsprechen, die direkt durch den anliegenden Lagerring begrenzt und abgedichtet wird. So kann eine vollständige Benetzung des jeweiligen Lagerrings mit Kühl- oder Heizmedium und damit eine gleichmäßige Temperatur über den gesamten Ringumfang eingestellt werden.

Zusätzlich zur Ermöglichung einer Erhitzung bzw. Kühlung durch fluide Medien kann im Hinblick auf bestimmte Anwendungsfälle eine Wälzlagereinheit vorgesehen werden, bei der zumindest einem Lagerring eine Kühlvorrichtung, insbesondere eine Kältemaschine oder Peltier-Element, und/oder eine Heizvorrichtung, insbesondere eine elektrische Widerstandsheizung, und/oder eine Induktions-, Mikrowellen- oder Strahlungsheizung zugeordnet ist.

In einer weiteren Ausgestaltung weist das Wälzlager ein doppelreihiges Wälzlager auf. Ein doppelreihiges Wälzlager zeichnet sich durch eine hohe Belastbarkeit aus. Allerdings weisen die Lagerringe des doppelreihigen Wälzlagers im Allgemeinen eine vergleichsweise große Höhe auf, so dass die Wärmeabfuhr aufgrund der höheren Wärmekapazität bedingt durch das größere Lagervolumen schwierig ist. Bei der erfindungsgemäßen Wälzlagereinheit kann nunmehr bei der Auswahl des Wälzlagers eine Berücksichtigung der Erwärmungstendenz des jeweiligen Lagers außer Betracht bleiben, da die Vorspannung während des Betriebs einstellbar ist.

Das Wälzlager innerhalb der Wälzlagereinheit kann als Schräg- oder Rillenkugellager, als Zylinderrollenlager, als Nadellager oder dergleichen ausgestaltet sein. Bei Schräglagem ist der Einfluss der Vorspannungsänderung bedingt durch unterschiedliche Erwärmung der Lagerringe besonders deutlich, da bei diesen Lagern die Änderung der radialen Abmessungen sowohl in einem Radial- als auch in einem Axialspiel resultiert. Die Führungsgenauigkeit ist folglich besonders mangelhaft. Die vorgeschlagene Wälzlagereinheit ist daher ganz besonders vorteilhaft, falls ein Schräglager vorgesehen ist. Dementsprechend ist auch das vorgeschlagene Verfahren besonders geeignet zum Einstellen der Vorspannung eines Schräglagers.

Des Weiteren ist die oben aufgezeigte Aufgabe im Hinblick auf einen Rundtisch mit den Merkmalen des Patentanspruchs 8 gelöst. Mit diesem Patentanspruch wird ein Rundschalt- oder Rundlauftisch mit einer erfindungsgemäßen Wälzlagereinheit angegeben, wobei das erste Bauteil einen Teller und das zweite Bauteil ein Gehäuse aufweist.

Bei dem erfindungsgemäßen Rundtisch kann die Vorspannung des Wälzlagers stets so geregelt werden, dass weder ein radiales und/oder axiales Spiel des Tellers mit einhergehender Bearbeitungs- oder Positionierungenauigkeit auftritt, noch dass eine erhöhte Lagerreibung zu befürchten ist. Damit ist ein Rundtisch für alle denkbaren Betriebszustände, d. h. für alle Belastungsfälle und alle denkbaren internen und/oder externen Temperatureinwirkungen angegeben.

Schließlich ist die oben aufgezeigte Aufgabe in Bezug auf eine Spindel mit den Merkmalen des Patentanspruchs 9 gelöst. Danach weist die Spindel eine erfindungsgemäße Wälzlagereinheit auf, wobei das erste Bauteil eine Spindelwelle und das zweite Bauteil ein Gehäuse aufweist. Dadurch wird eine Spindel bereitgestellt, die bei allen denkbaren Belastungs- und Hitzeeinwirkungen eine größtmögliche Positionier- und Bearbeitungsgenauigkeit verbunden mit einer langen Lebensdauer aufweist.

In Bezug auf weitere Vorteile und Weiterbildungen des erfindungsgemäßen Rundtisches und der erfindungsgemäßen Spindel wird auch auf die Ausführungen bezüglich des erfindungsgemäßen Verfahrens und der erfindungsgemäßen Wälzlagereinheit verwiesen.

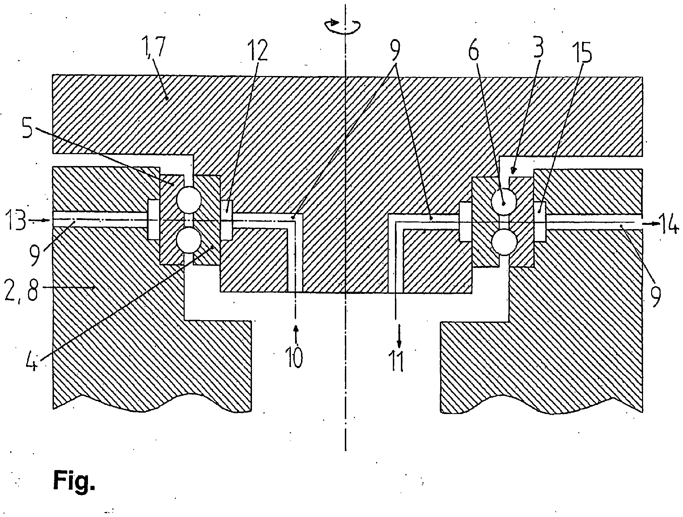

Es gibt nun verschiedene Möglichkeiten, die Lehre der vorliegenden Erfindung in vorteilhafter Weise auszugestalten und weiterzubilden. Dazu ist einerseits auf die nachgeordneten Ansprüche, andererseits auf die nachfolgende Erläuterung eines bevorzugten Ausführungsbeispiels des erfindungsgemäßen Verfahrens und der erfindungsgemäßen Vorrichtung anhand der Zeichnung zu verweisen. In Verbindung mit der Erläuterung der bevorzugten Ausführungsbeispiele anhand der Zeichnung werden auch im Allgemeinen bevorzugte Ausgestaltungen und Weiterbildungen der Lehre erläutert. In der Zeichnung zeigt die
- einzige Fig.: eine schematische Schnittansicht einer erfindungsgemäßen Wälzla- gereinheit, welche konkret innerhalb eines erfindungsgemäßen Rundtisches dargestellt ist, und anhand derer auch das erfindungs- gemäße Verfahren verdeutlicht wird.

Die einzige Fig. zeigt eine schematische Schnittansicht einer erfindungsgemäßen Wälzlagereinheit.

Ein erstes Bauteil 1 ist in einem zweiten Bauteil 2 drehbar gelagert, wozu zwischen den Bauteilen ein Wälzlager 3 angeordnet ist. Das Wälzlager 3 ist bei dieser Wälzlagereinheit als doppelreihiges Kugellager ausgeführt. Das Wälzlager 3 weist einen am ersten Bauteil 1 angeordneten Lagerinnenring 4 und einen am zweiten Bauteil 2 angeordneten Lageraußenring 5 auf. Zwischen den Lagerringen befinden sich eine Mehrzahl von doppelreihig angeordneten Wälzkörpern 6.

Bei der konkret dargestellten Vorrichtung ist die gezeigte Wälzlagereinheit Teil eines Rundtisches. Daher ist das erste Bauteil 1 als Teller 7 und das zweite Bauteil 2 als Gehäuse 8 ausgeformt.

In erfindungsgemäßer Weise ist eine unabhängige Temperaturregelung der beiden Lagerringe dadurch ermöglicht, dass jedem Lagerring ein eigener Kreislauf zum Zu- und Ableiten von Kühl- oder Heizmedium zugeordnet ist. Dazu sind sowohl im ersten Bauteil 1 als auch im zweiten Bauteil 2 Kanäle 9 ausgeformt, durch die sich ein Kühl- oder Heizmedium zum jeweiligen Lagerring führen und ableiten lässt.

Hier sind im Teller 7 sowohl eine Zuleitung 10 als auch eine Ableitung 11 für den Lagerinnenring 4 ausgeformt. In dieser Schnittansicht ist jeweils nur eine Zuleitung 10 bzw. Ableitung 11 sichtbar, es können über den Umfang des rotationssymmetrischen Tellers 7 jedoch mehrere solcher Leitungen angeordnet sein.

Über die Zuleitung 10 kann dem Lagerinnenring 4 ein Kühl- oder Heizmedium zugeführt werden. Dazu mündet die Zuleitung 10 in einen Ringkanal 12. Durch den inneren Ringkanal 12 kann der Lagerinnenring 4 an seinem gesamten Umfang mit Kühl- oder Heizmedium benetzt werden. Das Kühl- oder Heizmedium kann am Lagerinnenring 4 entlang fließen, bis es auf die innere Ableitung 11 trifft und in den Kreislauf des Kühl- bzw. Heizmediums zurückgeführt wird.

In weiter erfindungsgemäßer Weise sind auch in dem zweiten Bauteil 2, also dem Gehäuse 8, eine äußere Zuleitung 13 und eine äußere Ableitung 14 ausgeformt, mit denen sich dem Lageraußenring 5 ein Kühl- oder Heizmedium zuführen lässt. Auch die äußere Zuleitung 13 mündet in einen Ringkanal 15, wodurch der Lageraußenring 5 vollständig mit dem Kühl- oder Heizmedium benetzbar ist.

Mit dem erfindungsgemäßen Verfahren sowie den erfindungsgemäßen Vorrichtungen ist eine völlig unabhängige Temperaturregelung der beiden Lagerringe erreicht. So kann bei beliebigen Betriebszuständen, Belastungen und Wärmeeinwirkungen die gewünschte Lagervorspannung konstant gehalten oder jederzeit eine beliebige Lagervorspannung eingestellt werden.

Die Temperaturüberwachung der Lagerringe, die Temperierung des Kühl- oder Heizmediums sowie die Regelung der Kühl- oder Heizmediumzufuhrsind hier nicht dargestellt, da dem Fachmann aus dem Stand der Technik bekannt.

Abschließend sei hervorgehoben, dass das voranstehend beschriebene Ausführungsbeispiel die beanspruchte Lehre erörtert, diese jedoch nicht auf das Ausführungsbeispiel einschränkt.

## Patentansprüche

1. Verfahren zum Einstellen der Vorspannung eines Wälzlagers (3), insbesondere während des Betriebs, wobei das Wälzlager (3) zur drehbaren Lagerung eines ersten Bauteils (1) in einem zweiten Bauteil (2) zwischen den Bauteilen (1, 2) angeordnet ist, und wobei das Wälzlager (3) einen am ersten Bauteil (1) angeordneten Lagerinnenring (4), einen am zweiten Bauteil (2) angeordneten Lageraußenring (5) und eine Mehrzahl von Wälzkörpern (6) aufweist, wobei die Temperaturen an beiden Lagerringen gemessen werden, **dadurch gekennzeichnet, dass** sowohl die Temperatur des Lagerinnenrings (4) als auch die Temperatur des Lageraußenrings (5) unabhängig voneinander geregelt werden, indem ein Kühl- oder Heizmedium jeweils einem den Lagerinnenring (4) bzw. den Lageraußenring (5) zumindest größtenteils umgebenden Ringkanal (12, 15) über separate Zuleitungen (10, 13) oder separate Kreisläufe zugeführt wird, derart dass das Kühl- oder Heizmedium an dem jeweiligen Lagerring (4, 5) entlangfließen oder diesen vollständig benetzen kann.

2. Verfahren nach Anspruch 1, **dadurch gekennzeichnet, dass** die Temperaturen beider Lagerringe (4, 5) so geregelt werden, dass die Vorspannung während des Betriebs des Wälzlagers (3) konstant bleibt.

3. Wälzlagereinheit mit einstellbarer Vorspannung, mit einem ersten Bauteil (1), einem zweiten Bauteil (2) und einem zwischen den Bauteilen (1, 2) angeordneten Wälzlager (3) zur drehbaren Lagerung des ersten Bauteils (1) in dem zweiten Bauteil (2), wobei das Wälzlager (3) einen am ersten Bauteil (1) angeordneten Lagerinnenring (4), einen am zweiten Bauteil (2) angeordneten Lageraußenring (5) und eine Mehrzahl von Wälzkörpern (6) aufweist, wobei Vorrichtungen zur Temperaturmessung an beiden Lagerringen vorgesehen sind, **dadurch gekennzeichnet, dass** sowohl die Temperatur des Lagerinnenrings (4) als auch die Temperatur des Lageraußenrings (5) unabhängig voneinander regelbar sind, indem der Lagerinnenring (4) und der Lageraußenring (5) jeweils mit einer separaten Zuleitung (10, 13) oder einem separaten Kreislauf zur Zuführung jeweils eines Kühl- oder Heizmediums so verbunden sind, dass das Kühl- oder Heizmedium an dem jeweiligen Lagerring entlangfließen oder diesen vollständig benetzen kann.

4. Wälzlagereinheit nach Anspruch 3, **dadurch gekennzeichnet, dass** im ersten Bauteil (1) ein oder mehrere Kanäle (9) zum Zu- und Ableiten von Kühl- oder Heizmedium zum bzw. vom Lagerinnenring (4) und im zweiten Bauteil (2) ein oder mehrere Kanäle (9) zum Zu- und Ableiten von Kühl- oder Heizmedium zum bzw. vom Lageraußenring (5) ausgeformt sind.

5. Wälzlagereinheit nach Anspruch 4, **dadurch gekennzeichnet, dass** im ersten und/oder im zweiten Bauteil (1, 2) ein den Lagerinnenring (4) bzw. den Lageraußenring (5) zumindest größtenteils umgebender Ringkanal (12, 15) ausgeformt ist.

6. Wälzlagereinheit nach einem der Ansprüche 3 bis 5, **dadurch gekennzeichnet, dass** zumindest einem Lagerring (4, 5) eine Kühlvorrichtung, insbesondere eine Kältemaschine oder ein Peltier-Element, und/oder eine Heizvorrichtung, insbesondere eine elektrische Widerstandsheizung, und/oder eine Induktions-, Mikrowellen oder Strahlungsheizung zugeordnet ist.

7. Wälzlagereinheit nach einem der Ansprüche 3 bis 6, **dadurch gekennzeichnet, dass** das Wälzlager (3) ein doppelreihiges Wälzlager aufweist und/oder das Wälzlager (3) als Schräg- oder Rillenkugellager, als Zylinderrollenlager oder als Nadellager ausgestaltet ist.

8. Rundtisch, insbesondere Rundschalt- oder Rundlauftisch, mit einer Wälzlagereinheit nach einem der Ansprüche 3 bis 7, wobei das erste Bauteil einen Teller (7) und das zweite Bauteil ein Gehäuse (8) aufweist.

9. Spindel mit einer Wälzlagereinheit nach einem der Ansprüche 3 bis 7, wobei das erste Bauteil eine Spindelwelle und das zweite Bauteil ein Gehäuse aufweist.

## Claims

1. Method for adjusting the initial tension of a rolling bearing (3), especially during operation, the rolling bearing (3), for the rotatable support of a first component (1) in a second component (2), being arranged between the components (1, 2), and the rolling bearing (3) having an inner bearing raceway (4) arranged at the first component (1), an outer bearing raceway (5) arranged at the second component (2), and a plurality of rolling bodies (6) wherein the temperatures at the two bearing raceways are measured **characterized in that** the temperature of the inner bearing raceway (4) and the temperature of the outer bearing raceway (5) are regulated independently of each other, a cooling or heating medium being delivered via separate feed lines (10, 13) or separate circuits to a respective ring channel (12, 15) each surrounding largely one of the inner bearing raceway (4) and the outer bearing raceway (5) such that the cooling or heating medium can flow along or can wetting the respective bearing raceway (4, 5).

2. method according to claim 1, **characterized in that** the temperatures of the two bearing raceways (4, 5) are regulated in such a manner that the initial tension remains constant during the operation of the rolling bearing (3).

3. Rolling bearing unit with adjustable initial tension, having a first component (1), a second component (2) and a rolling bearing (3) arranged between the components (1, 2) for the rotatable support of the first component (1) in the second component (2), the rolling bearing (3) having an inner bearing raceway (4) arranged at the first component (1), an outer bearing raceway (5) arranged at the second component (2), and a plurality of rolling bodies (6), **characterized in that** devices for measuring the temperature are provided at the two bearing raceways, and **in that** both the temperature of the inner bearing raceway (4) and the temperature of the outer bearing raceway (5) can be regulated independently of each other, wherein the inner bearing raceway (4) comprises a inner ring channel (12) and the outer bearing raceway (5) comprises a ring channel (15) and each of the ring channels (12, 15) is connected to a separate feed line (10, 13) or separate circuits for the delivery of a cooling or heating medium respectively.

4. Rolling bearing unit according to claim 3, **characterized in that** one or more channels (9) for the delivery and discharge of cooling or heating medium to and from the inner bearing raceway (4) are formed in the first component (1) and one or more channels (9) for the delivery and discharge of cooling or heating medium to and from the outer bearing raceway (5) are formed in the second component (2).

5. Rolling bearing unit according to claim 4, **characterized in that** an annular channel (12, 15) surrounding at least the majority of the inner bearing raceway (4) and/or the outer bearing raceway (5) is formed in the first and/or in the second component (1, 2).

6. Rolling bearing unit according to any one of claims 3 to 5, **characterized in that** at least one bearing raceway (4, 5) is assigned a cooling apparatus, especially a refrigerating machine or a Peltier element, and/or a heating apparatus, especially an electrical resistance heating device, and/or an induction, microwave or radiant heating device.

7. Rolling bearing unit according to any one of claims 3 to 6, **characterized in that** the rolling bearing (3) has a double-row rolling bearing and/or the rolling bearing (3) is configured as an angular-contact or deep-groove ball bearing, as a cylindrical roller bearing or as a needle bearing.

8. Rotary table, especially a rotary indexing table or a rotary surface table, having a rolling bearing unit according to any one of claims 3 to 7, wherein the first component has a plate (7) and the second component has a housing (8).

9. Spindle having a rolling bearing unit according to any one of claims 3 to 7, wherein the first component has a spindle shaft and the second component has a housing.

## Revendications

1. Procédé de réglage de la précontrainte d'un palier à roulements (3), en particulier en cours de service, le palier à roulements (3), en vue du montage rotatif d'une première pièce (1) dans une deuxième pièce (2), étant disposé entre lesdites pièces (1, 2), et le palier à roulements (3) comportant une bague intérieure (4), agencée sur la première pièce (1), une bague extérieure (5) agencée sur la deuxième pièce (2) et une pluralité de corps de roulement (6) et les températures sont mesurées sur les deux bagues **caractérisé en ce que** tant la température de la bague intérieure (4) que la température de la bague extérieure (5) sont réglées indépendamment l'une de l'autre, un fluide de refroidissement ou de chauffage étant délivré par l'intermédiaire de lignes d'alimentation séparées (10, 13) ou de circuits séparés à un canal annulaire respectif (12, 15) entourant chacun en grande partie l'une des bague intérieure (4) et extérieure **en ce que** le fluide de refroidissement ou de chauffage peut s'écouler le long ou peut mouiller des bagues (4, 5) respectivement.

2. Procédé selon la revendication 1, **caractérisé en ce que** les températures des deux bagues (4, 5) sont réglées de telle sorte que la précontrainte reste constante en cours de service du palier à roulements (3).

3. Unité de palier à roulements avec une précontrainte réglable, comportant une première pièce (1), une deuxième pièce (2) et un palier à roulements (3) agencé entre les deux pièces (1, 2) en vue du montage rotatif de la première pièce (1) dans la deuxième pièce (2), le palier à roulements (3) comportant une bague intérieure (4), agencée sur la première pièce (1), une bague extérieure (5) agencée sur la deuxième pièce (2) et une pluralité de corps de roulement (6), **caractérisée en ce que** des dispositifs de mesure de la température sont prévus sur les deux bagues, et **en ce que** tant la température de la bague intérieure (4) que la température de la bague extérieure (5) sont réglées indépendamment l'une de l'autre, dans lequel la bague intérieure (4) comprend un canal annulaire intérieur (12) et la bague extérieur (5) comprend un canal annulaire (15) et chacun des canaux annulaires (12, 15) est relié à une ligne d'alimentation séparée (10, 13) ou des circuits séparés pour la délivrance respectivement d'un fluide de refroidissement ou de chauffage.

4. Unité de palier à roulements selon la revendication 3, **caractérisée en ce qu'**un ou plusieurs conduits (9) pour l'admission du fluide de refroidissement ou de chauffage dans la bague intérieure (4) ou pour l'évacuation dudit fluide hors de celle-ci sont ménagés dans la première pièce (1), et un ou plusieurs conduits (9) pour l'admission du fluide de refroidissement ou de chauffage dans la bague extérieure (5) ou pour l'évacuation dudit fluide hors de celle-ci sont ménagés dans la deuxième pièce (2).

5. Unité de palier à roulements selon la revendication 4, **caractérisée en ce qu'**un conduit annulaire (12, 15) entourant au moins en majeure partie la bague intérieure (4) ou la bague extérieure (5) est réalisé dans la première pièce (1) et/ou dans la deuxième pièce (2).

6. Unité de palier à roulements selon l'une quelconque des revendications 3 à 5, **caractérisée en ce qu'**un dispositif de refroidissement, en particulier une machine frigorifique ou un élément Peltier, et/ou un dispositif de chauffage, en particulier un chauffage à résistance électrique, et/ou un chauffage par induction, un chauffage à micro-ondes ou un chauffage par rayonnement sont associés à au moins l'une des bagues (4, 5).

7. Unité de palier à roulements selon l'une quelconque des revendications 3 à 6, **caractérisée en ce que** le palier à roulements (3) comporte un palier à roulements à deux rangs et/ou le palier à roulements (3) est réalisé sous la forme d'un roulement à billes à portée oblique ou d'un roulement à billes rainuré, sous la forme d'un roulement à rouleaux cylindriques ou sous la forme d'un roulement à aiguilles.

8. Table ronde, en particulier table à transfert circulaire ou table à voie circulaire, comportant une unité de palier à roulements selon l'une quelconque des revendications 3 à 7, la première pièce comportant un plateau (7) et la deuxième pièce comportant un carter (8).

9. Broche avec une unité de palier à roulements selon l'une quelconque des revendications 3 à 7, la première pièce comportant un arbre de broche et la deuxième pièce comportant un carter.
